# EUROPEAN PATENT APPLICATION

(11) **EP 2 955 105 A1**
(43) Date of publication of application: **16.12.2015**
(21) Application number: 14460033.5
(22) Date of filing: 10.06.2014
(51) Int. Cl.: B64C 9/38, B64C 21/00, B64C 21/02, B64C 21/04

(54) **Autonomous active flow control system**

(71) Applicant: Instytut Lotnictwa, 02-256 Warszawa (PL); Fraunhofer-Gesellschaft zur Förderung der angewandten Forschung e.V., 80686 München (DE)
(72) Inventor: Stalewski, Wienczyslaw, 96-300 Zyrardów (PL); Krzysiak, Andrzej, 02-798 Warszawa (PL); Schüller, Martin, 09112 Chemnitz (DE)
(74) Representative: Woznicki, Jerzy

(57) **Abstract**

The system comprises a main wing (3) with deflected flap (5), a blowing arrangement (1) with a number of nozzles located in front of the deflected flap (5) along the trailing edge of the main wing (3), static pressure sensors (4) fastened to the deflected flap (5), flight sensors (7) for measuring aircraft flight parameters, activating device for activating the blowing arrangement (1), and a control unit (6) connected to the sensors and activating device. The each nozzle is in the form of triple mini nozzle (2) with one inlet channel (10), streamlined collection chamber (9) and three outlet channels (11). wherein the outlet openings of the outlet channels (11) are located on the trailing edge of the main wing (3) above the axis of rotation of the flap (5) and the static pressure sensors (4) are located on the upper surface of the deflected flap (5), close to the flap trailing edge.

## Description

The subject of the invention is an autonomous active flow control system intended to use to control the flow on the aircraft wing flaps.

A wing flap is a one of typical high-lift devices applied in aircraft wings. Deflection of the flap increases a lift force of the wing and is usually used in takeoff and landing flight conditions. In general, the higher deflection angles of flap the greater increase of lift force. However this rule fails when deflection of flap is so high that on the flap, or even on the whole wing, strong flow separation appears. A well-known way to counteract the negative effects of this phenomenon is the use of additional blowing air on the wing or its flap. Additional blow increases flow velocity in the boundary layer flowing at the wing surface which results in delayed flow separation, and increased aerodynamic properties of the wing. These devices must operate reliably under unfavourable conditions and dynamic loads, which requires a high degree of integration with the wing structure.

Patent GB 675994 presents an aircraft wing embodiment, which uses the blowing directly into the flap boundary layer by means of slot nozzles or small individual nozzles with outlets situated at the trailing edge of the main wing. In order to increase the efficiency of the nozzles system and to obtain high-speed of the blowing air jets, the outlet section of the nozzles has a cross-section larger than the inlet section. The spacing between the nozzles and their size was chosen taking into account the variable cross-section along the wing span, the surface of the flaps, and the required amount of air supplied to the nozzle.

Patent application US 20130026300 presents a high lift system with a main wing and regulating flap, having a flow control device for purposes of controlling the flow around the high lift system with at least one inlet duct and at least one outlet located in the region of regulating flap. The high lift system can be equipped with opening and closing device provided for at least one outlet, which activation is determined by the setting of the regulating flap, and valve to control the volumetric flow within the flow control device. One of the example embodiment presents a multiplicity of possible arrangements of outlets provided on regulating flaps and on the main wing. In this example multiplicity of outlets can be served with a relatively small number of inlet ducts. The high lift system can be equipped with an activation device provided for the receipt of flight state data and the generation of control signals, by means of which the flow control device can be activated and deactivated under particular flight conditions. Such flight state data can be collected by load sensors or flow sensors located on the regulating flaps or in the region around the regulating flaps.

Patent application WO 2012003973 presents an aircraft with wings and a system for minimizing the influence of unsteady flow states integrated with a flight control device The main wing of the aircraft has an adjustably arranged wing trailing edge flap. The system has at least one arrangement of flow-influencing devices in at least one surface segment of each wing extending in the wingspan direction. The flow-influencing device contains a pressure chamber and outlet openings generating an air streams flowing around the surface of the flap. The outlet openings can be of various shape, for example circular, ellipsoid or sickle-shaped. The system is also equipped with detection devices for detecting unsteady flow states acting on the aircraft, connected with flow state sensor arrangement, including static and dynamic pressure sensors and temperature sensors. The flow state sensors may be located on the upper side of the main wing or the wing flap. The sensors data are transmitted to the flight control device. The flight control device has presetting device generating target parameters for the flow-influencing devices. The flight control device receives all necessary input variables as control variables, and after a control process algorithm generates the various output signals for flow-influencing devices and/or the flap drive, to minimize the influence of unsteady flow states on the aircraft.

The purpose of the present invention is to provide an autonomous active flow control system of improved aerodynamic properties.

The autonomous active flow control system, comprised of a main wing with deflected flap, a blowing arrangement with a number of nozzles located in front of the deflected flap along a trailing edge of the main wing, static pressure sensors fastened to the deflected flap, flight sensors for measuring aircraft flight parameters, activating device for activating the blowing arrangement, and a control unit connected to the sensors and activating device, is characterized according to the invention in that each nozzle is in the form of triple mini nozzle with one inlet channel, streamlined collection chamber and three outlet channels, wherein the outlet openings of the outlet channels are located on the trailing edge of the main wing above the axis of rotation of the flap and the static pressure sensors are located on the upper surface of the deflected flap close to the flap trailing edge.

It is preferred that each triple mini nozzle has a side cross section axially convergent towards the trailing edge between the inlet channel and outlet opening, and in a top view plane the streamlined collection chamber coupled with the inlet channel has divergent part coupled with the outlet channels divergent towards the trailing edge. It is preferred that the outlet openings of the triple mini nozzles forming the blowing arrangement are arranged at equal distances from each other.

It is preferred that the total cross-sectional area of the outlet openings of the outlet channels in each nozzle is smaller than the cross section of the inlet opening in the inlet channel.

It is preferred that the inlet channel of each triple mini nozzle is provided with a valve controlled by the control unit.

It is also preferred that the inlet channel of each triple mini nozzle is connected to a pressure chamber provided with an air flow regulator controlled by the control unit.

The solution according to the invention lends itself for use in various types of wings with adjustable wing flaps. The autonomous active flow control system controls flow on a deflected aircraft wing flap and protects this flow against its separation allowing to achieve a much higher flap deflection angles, than in the absence of this device, and in consequence a greater lift force. The invention uses a very simple method to predict whether in result of the flap deflection to a higher angle, the flow on the flap will be attached or separated.

Application of the triple mini-nozzles of properly optimized internal shape, allows to obtain an uniform flow over the whole trailing edge. The advantage of using nozzles with three-channel outlets in comparison with the slot nozzles or single convergent nozzles is the achievement of the same effect, that is elimination or diminishing of the flow separation with a much lower air requirement. Thanks to the usage of the convergent outlet channels, the outlet part of the nozzle can fit in the thin main wing trailing edge.

The air streams blowing out from the said nozzles situated at the trailing edge of the main wing, that is right in front of the flap, is directed into the flap-boundary layer, so their effectiveness is considerably higher than for the air jets blowing out at some angle relative to the flap surface.

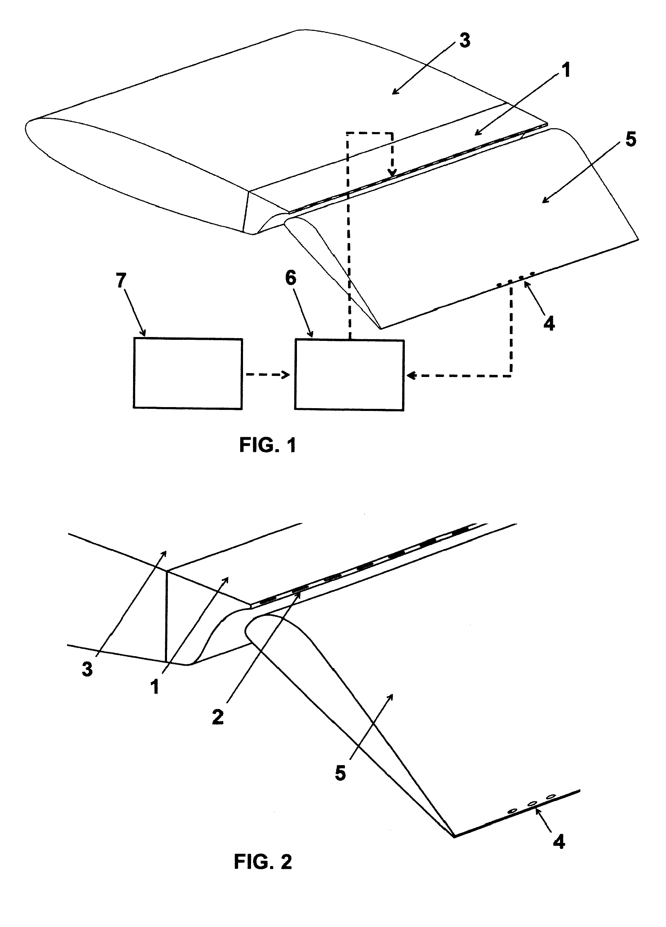

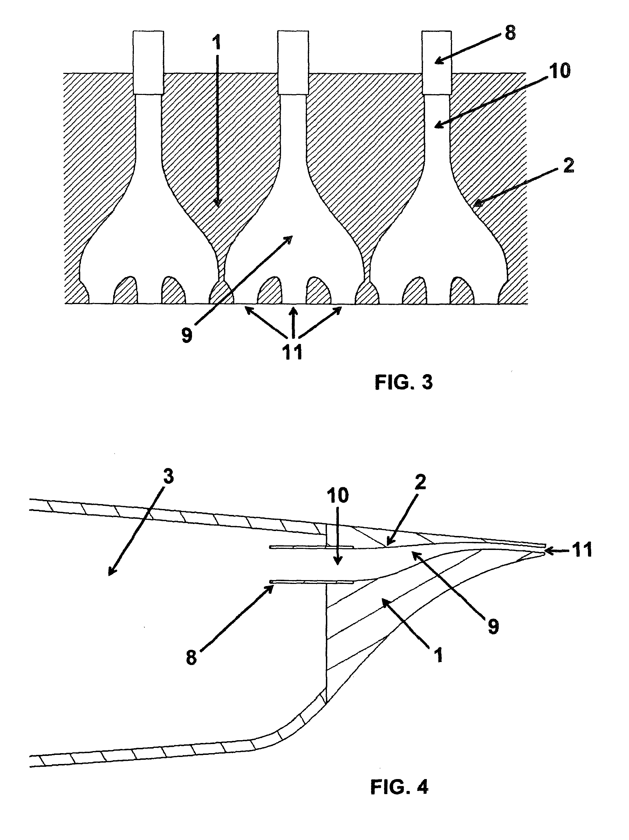

The subject of the invention is shown in an example of its embodiment in the attached drawing, in which fig. 1 depicts the overall scheme of the autonomous active flow control system, fig. 2 shows a part of the wing from fig. 1 in enlarged view, fig. 3 shows a part of the blowing arrangement in the main wing airfoil chord plane, and fig. 4 shows a cross-sectional view of the airfoil in axial plane of the triple mini nozzle.

As shown in fig. 1, 2, the autonomous active flow control system comprises a main wing 3 with deflected flap 5, a blowing arrangement 1 with a number of nozzles located in front of the deflected flap 5 along a trailing edge of the main wing 3, static pressure sensors 4 fastened to the deflected flap 5, flight sensors 7 for measuring aircraft flight parameters, and a control unit 6. The control unit 6 is connected to the sensors and activating device for activating the blowing arrangement 1. Each nozzle is in a form of triple mini nozzle 2 with one inlet channel 10, streamlined collection chamber 9 and three outlet channels 11. The outlet openings of the outlet channels 11 are located on the trailing edge of the main wing 3 above the axis of rotation of the deflected flap 5. The static pressure sensors 4 are located on the upper surface of the deflected flap 5, close to the flap trailing edge.

As shown in fig. 3, 4, each of the triple mini nozzles 2 has an axial cross section convergent towards the trailing edge between the inlet channel 10 and outlet opening. In the top view plane the streamlined collection chamber 9 coupled with the inlet channel 10 has divergent part connected with the outlet channels 11 divergent towards the trailing edge. The outlet openings of the triple mini nozzles 2 forming the blowing arrangement 1 are arranged at equal distances from each other. The total cross-sectional area of the outlet openings of the outlet channels 11 in each nozzle is smaller than the cross section of the inlet opening in the inlet channel 10.

The triple mini nozzle 2 can be provided with a valve located at the inlet channel 10 and controlled by the control unit 6. The valve can be located in the adapter 8 connected with a pressure chamber integrated with the main wing 3. The inlet channel 10 of each triple mini nozzle 2 can be also connected to a pressure chamber provided with an air flow regulator controlled by the control unit 6.

Air jets blowing from the triple mini nozzles reinforce the stability of the boundary layer on the surface of the flat preventing the flow from separation. The control unit 6 forecasts a flow separation on the flap based on the monitored static pressure measured by static pressure sensors 4 placed on the upper surface of the deflected flap 5, close to the flap trailing edge, taking into account the specific aerodynamic phenomena that take place in this flap area during the appearance of flow separation. For the attached flow on the deflected flap 5 the static pressure sensors 4 usually indicate higher local pressure than the static pressure of the undisturbed flow measured by the free stream flight sensors 7 and for the separated flow the static pressure sensors 4 indicate lower local pressure than the static pressure of the undisturbed flow. Based on this phenomenon, the control unit 6 predicts the probability of flow separation appearance on the flap.

If the probability of flow separation is high, the control unit 6 increases the intensity of blowing from blowing arrangement 1. Air stream enhance stability of the boundary layer on the flap surface, what protect against flow separation. Generally, after the blowing activation by the blowing unit 1, the flow again becomes attached to the surface of the flap, even if before the blowing activation the flow was separated. By the usage of the valve the control unit 6 controls the volume flow rate of the jets from triple mini-nozzles 2.

If the probability of flow separation on the flap is low, the control unit 6 gradually decreases blowing speed.

If the probability of flow separation on the flap is very low, blowing air from the blowing arrangement 1 is completely cut off. The monitoring process of the static pressure sensor 4 measurements and flight sensors 7 measurements, and monitoring and controlling volume flow rate of the blowing by the blowing arrangement 1 is carried out continuously. The described control system operates completely autonomously.

## Claims

1. An autonomous active flow control system comprising a main wing with deflected flap, a blowing arrangement with a number of nozzles located in front of the deflected flap along a trailing edge of the main wing, static pressure sensors fastened to the deflected flap, flight sensors for measuring aircraft flight parameters, activating device for activating the blowing arrangement, and a control unit connected to the sensors and activating device, **characterized in that** each nozzle is in the form of triple mini nozzle (2) with one inlet channel (10), streamlined collection chamber (9) and three outlet channels (11), wherein the outlet openings of the outlet channels (11) are located on the trailing edge of the main wing (3) above the axis of rotation of the flap (5) and the static pressure sensors (4) are located on the upper surface of the deflected flap (5), close to the flap trailing edge.

2. System according to claim 1, wherein each triple mini nozzle (2) has a side cross section axially convergent towards the trailing edge between the inlet channel (10) and outlet opening, and in a top view plane the streamlined collection chamber (9) coupled with the inlet channel (10) has divergent part coupled with the outlet channels (11) divergent towards the trailing edge.

3. System according to claim 1, wherein the outlet openings of the triple mini nozzles (2) forming the blowing arrangement (1) are arranged at equal distances from each other.

4. System according to claim 1, wherein the total cross-sectional area of the outlet openings of the outlet channels (11) in each nozzle is smaller than the cross section of the inlet opening in the inlet channel (10).

5. System according to claim 1, wherein the inlet channel (10) of each triple mini nozzle (2) is provided with a valve controlled by the control unit (6).

6. System according to claim 1, wherein the inlet channel (10) of each triple mini nozzle (2) is connected to a pressure chamber provided with an air flow regulator controlled by the control unit (6).
